# EUROPÄISCHE PATENTANMELDUNG

(11) **EP 2 722 723 A2**
(43) Veröffentlichungstag der Anmeldung: **23.04.2014**
(21) Anmeldenummer: 13188089.0
(22) Anmeldetag: 10.10.2013
(51) Int. Cl.: G05D 16/10

(54) **Regelstellglied**

(30) Priorität: 19.10.2012 DE 102012109977
(71) Anmelder: Karl Dungs GmbH & Co.KG, 73660 Urbach (DE)
(72) Erfinder: Bathke, Lars, 73614 Schorndorf (DE)
(74) Vertreter: Rüger, Barthelt & Abel

(57) **Zusammenfassung**

Das erfindungsgemäße Regelstellglied (10) weist ein erstes Teil (24) mit einer ersten Wandanordnung (12) und einem Boden (16) auf, die ein Einströmungsvolumen (18) umgrenzen. Die erste Wandanordnung (12) weist wenigstens eine Durchflussöffnung (22, 23) auf, durch die Fluid aus dem Einströmungsvolumen (18) hindurchströmen kann. Das Regelstellglied (10) weist ferner ein zweites Teil (28) mit einer zweiten Wandanordnung (30) auf, die entlang der ersten Wandanordnung (12) verstellbar angeordnet ist. Dadurch kann der Fluidstrom durch eine Durchflussöffnung (22, 23) graduell freigegeben oder begrenzt werden. Vorzugsweise ist der Boden (16) so angeordnet, dass der Boden (16) eine Grundeinströmungsrichtung (Sₑ) in das Einströmungsvolumen (18) bricht und das zweite Teil (28) von Einströmungsdruckstößen abschirmt. Vorzugsweise weist die zweite Wandanordnung (30) wenigstens ein Paar Wandabschnitte (32, 34) auf, die vorzugsweise so gegenüber angeordnet sind, das sich die Kräfte auf die Wandabschnitte (32, 34) im Zentrum des zweiten Teils (28) aufheben.

## Beschreibung

Gegenstand der Erfindung ist ein Regelventil zur eingangsdruckunabhängigen Regelung eines Ausgangsdruckes von Fluiden, insbesondere Gasen.

Zur Regelung eines Ausgangsdruckes sind beispielsweise aus der DE 40 08 493 A1 Doppelsitzregelventile bekannt, die über zwei Verschlussteile mit dazugehörigen Ventilsitzen verfügen, wobei die Verschlussteile miteinander verbunden sind. Die durch eine Druckdifferenz zwischen Eingangsdruck und Ausgangsdruck auf die Flächen der Verschlussteile wirkenden Kräfte sind dem Betrage nach gleich und entgegengesetzt gerichtet und heben sich durch die Verbindung zwischen den Verschlussteilen auf. Doppelsitzregelventile der beschriebenen Art müssen einerseits sehr genau gefertigt werden und benötigen andererseits zwingend zwei Durchlässe und damit viel Platz. Bauartbedingt weisen sie mehrfache Gasumlenkungen und dadurch einen relativ hohen Strömungswiderstand auf.

Unter der Webadresse: www.arca.de/download/1/ARCA_SLY_STELLVENTILE_DE.PDF wird außerdem ein Schmiedeventil offenbart (Seite 4 "mit Lochkegel"), das als Schieberventil ausgebildet ist.

Ausgehend von diesem Stand der Technik ist es Aufgabe der Erfindung, ein Regelventil zur eingangsdruckunabhängigen Druckregelung anzugeben, das über eine kompakte Bauform verfügt.

Diese Aufgabe wird erfindungsgemäß mit einem Regelventil mit den Merkmalen nach Anspruch 1 gelöst.

Das Regelventil weist ein erstes Teil auf, das einen geschlossenen Boden sowie eine erste Wandanordnung mit wenigstens einer Durchflussöffnung aufweist, wobei der Boden und die Wandanordnung ein Einströmungsvolumen umgrenzen. Außerdem weist das Regelventil ein zweites Teil auf, das außerhalb des Einströmungsvolumens angeordnet ist und eine zweite Wandanordnung mit wenigstens zwei Wandabschnitten aufweist. Die zweite Wandanordnung ist zu der ersten Wandanordnung in einer Verstellrichtung verstellbar angeordnet, um die Durchflussöffnung durch die Wandabschnitte graduell freizugeben oder zu verschließen. Die zweite Wandanordnung ist vorzugsweise parallel entlang der ersten Wandanordnung verstellbar. Die zweite Wandanordnung kann jedoch auch entlang der ersten Wandanordnung um wenigstens eine Drehachse (dreh-) verstellbar angeordnet sein. Ein Stellantrieb ist mit dem zweiten Teil verbunden, um dieses in oder um eine Verstellrichtung zu bewegen. Der Boden und die Wandanordnung des ersten Teils umgrenzen ein Einströmungsvolumen und schirmen Teile des zweiten Teiles, das als Verschlussteil des Ventils bezeichnet werden kann, insbesondere gegen solche Kräfte ab, die aufgrund von Druckschwankungen des Eingangsdrucks oder einem eingangseitigem Druckstoß zustande kommen können. Diese Druckschwankungen könnten andernfalls zu einer ungewünschten Stellbewegung des Regelventils führen.

Der Boden des ersten Teils ist im Wesentlichen geschlossen, kann jedoch auch Poren, Mikroöffnungen sowie kleine Ausnehmungen enthalten. Solche Öffnungen haben vorzugsweise einen derart geringen Strömungsquerschnitt und einen solchen Strömungswiderstand, dass eingangsseitige Druckstöße nicht in das zwischen dem ersten und dem zweiten Teil umgrenzte Volumen vordringen.

Teile des Bodens des ersten Teils können in das Einströmungsvolumen hineinragen. Der Boden kann beispielsweise rund sein und die erste Wandanordnung kann eine zylindrische Grundform aufweisen. Mit einer solchen zylinderförmigen Wandanordnung und einem runden Boden wird ein im Wesentlichen zylinderförmiges Einströmungsvolumen umgrenzt. Die Wandanordnung kann jedoch auch andere regelmäßige, beispielsweise quaderartige, oder unregelmäßige Grundformen aufweisen. Die erste Wandanordnung weist wenigstens eine Durchflussöffnung auf, durch die das Fluid von einem Bereich mit einem Eingangsdruck in einen Bereich mit einem Ausgangsdruck treten kann. Eine Durchflussöffnung weist vorzugsweise eine zusammenhängende Ausnehmung in der ersten Wandanordnung auf, kann jedoch auch eine unterbrochene Ausnehmung in der ersten Wandanordnung aufweisen. Eine Durchflussöffnung kann eine runde, wie beispielsweise kreisförmige oder ellipsenförmige, oder eine eckige, beispielsweise rechteckige, Ausnehmung aufweisen. Die Durchflussöffnung kann auch eine andere regelmäßig oder unregelmäßig geformte Ausnehmung aufweisen. Eine Durchflussöffnung kann auch durch eine Öffnung in einem von der ersten Wandanordnung abgesetzten Anbauteil oder aber durch eine Öffnung in einem aus der ersten Wandanordnung herausgearbeiteten Teil gebildet werden. Eine Durchflussöffnung kann außerdem beispielsweise in sich geschlossen, entlang oder um die gesamte erste Wandanordnung angeordnet sein. Es können außerdem mehrere Durchflussöffnungen in bzw. an der ersten Wandanordnung angeordnet sein.

Die wenigstens zwei Wandabschnitte der zweiten Wandanordnung des zweiten Teils können räumlich getrennt sein, sie können durch ein oder mehrere Zwischenstücke miteinander verbunden, oder nebeneinander direkt verbunden angeordnet sein, oder es kann sich bei den wenigstens zwei Wandabschnitten um lediglich gedachte Abschnitte einer Wand handeln. Die zweite Wandanordnung kann parallel zu der ersten Wandanordnung in einer Verstellrichtung verstellbar oder um eine Drehachse rotierbar entlang der ersten Wandanordnung angeordnet sein. Durch die verstellbare Anordnung der zweiten Wandanordnung und der Durchflussöffnung in der ersten Wandanordnung wird letztendlich ein verstellbarer Durchflussquerschnitt für das Fluid geschaffen. Durch das Verstellen der zweiten Wandanordnung in einer Verstellrichtung kann der Durchflussquerschnitt für das Fluid vergrößert oder verkleinert werden. Durch Abstimmen der Form und der Fläche der einen oder mehreren Durchflussöffnungen mit der zweiten Wandanordnung kann ein gewünschter Durchflussquerschnittsverlauf über den Verstellweg erreicht werden. Mithilfe eines Stellantriebs, der mit dem zweiten Teil verbunden ist, kann der Durchflussquerschnitt entsprechend dem Druckunterschied eingestellt werden.

Vorzugsweise existiert wenigstens eine Stellposition der ersten Wandanordnung und der zweiten Wandanordnung für die die eine oder mehreren Durchflussöffnungen geschlossen, das heißt dicht, sind. Vorzugsweise ist die zweite Wandanordnung parallel zur ersten Wandanordnung verstellbar eingerichtet.

In einer bevorzugten Ausführungsform sind jeweils zwei Wandabschnitte der zweiten Wandanordnung miteinander verbunden. Die Verbindung kann direkt oder über ein oder mehrere Zwischenstücke oder andere Wandabschnitte geschaffen sein. Zwei miteinander verbundene Wandabschnitte dieser Ausführungsform bilden ein Wandabschnittspaar.

Ein Teil des ersten Wandabschnitts und ein Teil des zweiten Wandabschnitts eines Wandabschnittpaares können die Durchflussöffnungen zumindest teilweise verdecken. Solche Teile können als Begrenzungsteile des ersten und des zweiten Wandabschnittes bezeichnet werden. Auf der einen Seite solcher Begrenzungsteile herrscht der Ausgangsdruck Pₐ und auf der anderen Seite herrscht der Eingangsdruck Pₑ.

Bevorzugt sind die Wandabschnitte eines Wandabschnittpaares so angeordnet, dass es erstens eine erste Ebene gibt und die Projektionsfläche des Begrenzungsteils des ersten Wandabschnitts auf diese erste Ebene gleich der Projektionsfläche des Begrenzungsteiles des zweiten Wandabschnittes auf diese erste Ebene ist. Unter "Projektionsfläche" ist der Flächeninhalt der Projektion des jeweiligen Begrenzungsteils auf die erste Ebene zu verstehen.

Vorzugsweise gibt es zweitens eine zweite Ebene, die auf der ersten Ebene senkrecht steht, so dass die Projektionsfläche des Begrenzungsteils des ersten Wandabschnitts des Wandabschnittpaares auf diese zweite Ebene Null ist und auch die Projektionsfläche des Begrenzungsteils des zweiten Wandabschnitts auf diese zweite Ebene Null ist.

Vorzugsweise gibt es drittens zusätzlich eine dritte Ebene, die auf der ersten Ebene und der zweiten Ebene senkrecht steht, so dass die Projektionsfläche des Begrenzungsteils des ersten Wandabschnitts auf diese dritte Ebene Null ist und auch die Projektionsfläche des Begrenzungsteils des zweiten Wandabschnitts auf diese dritte Ebene Null ist.

Die Wandabschnitte eines Wandabschnittpaares sind demgemäß vorzugsweise so angeordnet, dass die Wandabschnitte in entgegengesetzte Richtungen weisende Flächenvektoren aufweisen. Ein Flächenvektor gibt die Richtung der Kraft auf einen Wandabschnitt auf Grund einer Druckdifferenz zwischen einem Druck Pₑ auf der einen Seite der Wand und einem Druck Pₐ auf der anderen Seite der Wand an. Der Betrag des Flächenvektors multipliziert mit der Druckdifferenz ergibt den Betrag der Kraft auf den Wandabschnitt.

Auf diese Weise heben sich die Kräfte auf die Wandabschnitte eines Wandabschnittpaares auf und es wirkt vorzugsweise keine resultierende Kraft auf Grund eines Druckunterschiedes zwischen Eingangsdruck Pₑ und Ausgangsdruck Pₐ auf die zweite Wandanordnung.

Vorzugsweise heben sich die Kräfte auf die Wandabschnitte eines Wandabschnittpaares in einem Punkt auf, so dass kein Drehmoment und keine Nettokraft auf Grund eines Druckunterschiedes zwischen Eingangsdruck Pe und Ausgangsdruck Pₐ auf die zweite Wandanordnung ausgeübt werden.

Bevorzugt sind die Wandabschnitte eines Wandabschnittpaares so angeordnet, dass die Wandabschnitte des Wandabschnittpaares in Bezug auf eine Ebene flächensymmetrisch zu einander angeordnet sind.

Vorzugsweise weist das erste Teil eine erste Wandanordnung auf, die eine hohlzylindrische Grundgestalt aufweist. Auf diese Weise kann ein Einströmungsvolumen geschaffen werden, das eine zylindrische Grundgestalt hat.

Durch den Boden des ersten Teils kann die Grundrichtung des Einstroms gebrochen werden. Der Boden des ersten Teils kann in das Einströmungsvolumen vorstehen. So kann der Einstrom in das Einströmungsvolumen in wenigstens zwei Teilströme unterschiedlicher Richtung unterteilt werden. Der Boden kann beispielsweise konusförmig oder kegelförmig, kegelstumpfförmig, pyramidenförmig, giebelförmig oder in einer sonstigen zur Unterteilung in Teilströme geeigneten Weise in das Einströmungsvolumen hineinragen.

In einer vorteilhaften Ausführungsform besitzt der Boden wenigstens eine Strömungsleitfläche. Durch eine Strömungsleitfläche kann ein Fluidstrom auf eine Durchflussöffnung gerichtet werden. Oder es können beispielsweise durch eine oder mehrere Strömungsleitflächen ein oder mehrere Teilströme auf verschiedene Abschnitte einer Durchflussöffnung oder auf zwei Durchflussöffnungen geleitet werden. Auf diese Weise kann auch der Durchflusswiderstand des Regelventils vermindert werden.

Vorzugsweise weist der Stellantrieb eine Druckmembran auf, wobei auf einer Seite der Druckmembran der Ist-Druck Pₐ herrscht und auf der anderen Seite der Druckmembran der Solldruck vorgegeben werden kann. Dies kann beispielsweise erfolgen, indem diese andere Seite der Membran mit dem Solldruck beaufschlagt wird. Alternativ kann ein mechanisches Kraftäquivalent beispielsweise durch eine Feder oder ein Gewicht vorgesehen sein. Der Stellantrieb kann auch eine Kombination aus einer Druckdose und einer Feder zur Solldruckvorgabe aufweisen. Vorzugsweise ist der Sollwertgeber verstellbar eingerichtet.

In einer bevorzugten Ausführungsform ist das Regelstellglied mit einer Schließventilanordnung kombiniert, die wenigstens ein Schließventil aufweist. Bei einem Schließventil kann es sich um ein Schieberventil handeln. Vorzugsweise handelt es sich bei dem Schließventil aber um ein Sitzventil. Mit Hilfe des Schließventils kann das Einströmungsvolumen wenigstens auf einer Seite des Regelstellglieds fluidisch geschlossen werden. Der Fluidstrom durch das erste Teil und das zweite Teil kann auf diese Weise vorzugsweise vollständig unterbunden werden.

In einer bevorzugten Ausführungsform weist das Schließventil einen ersten Ventilsitz und ein erstes Verschlussteil sowie eine erste Dichtung und ein zweites Schließventil mit einem zweiten Ventilsitz und einem zweiten Verschlussteil sowie mit einer zweiten Dichtung auf. Die Schließventilanordnung ist dazu eingerichtet, dass beim Öffnen der Schließventilanordnung erst das erste Schließventil geöffnet wird, einen ersten Fluideinstromquerschnitt freigibt und einen Einstrom in das Einströmungsvolumen erlaubt und danach das zweite Schließventil geöffnet wird und einen zweiten Fluideinstromquerschnitt in das Einströmungsvolumen freigibt. Vorzugsweise kann die Schließventilanordnung mit einem einzigen Stellantrieb betätigt werden.

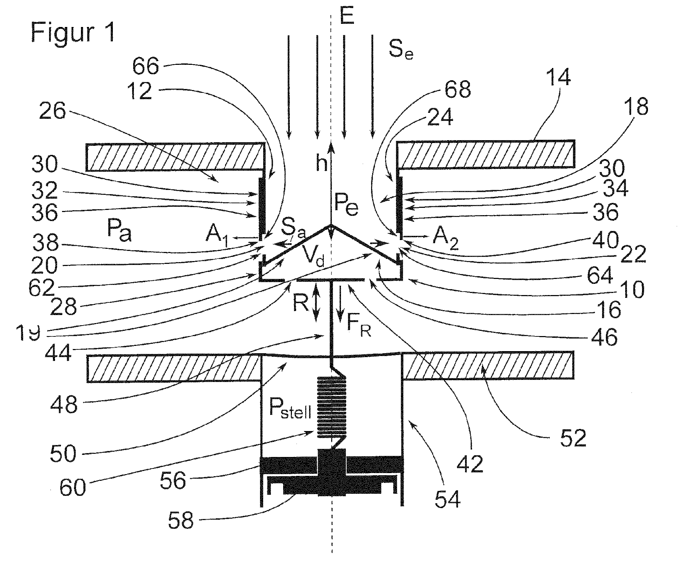

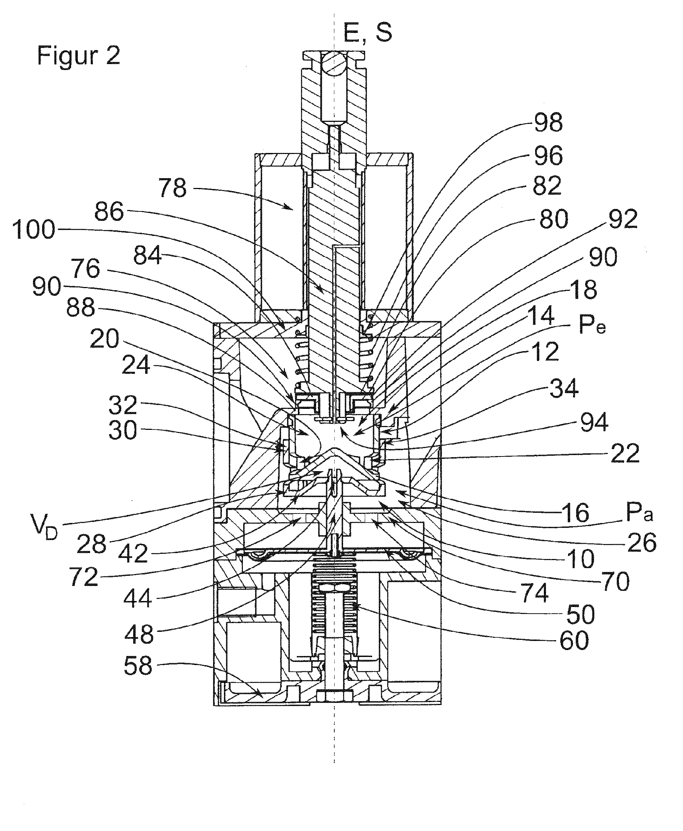

Vorteilhafte Ausführungen der Erfindung ergeben sich aus den abhängigen Patentansprüchen und der Beschreibung. Vorteilhafte Weiterbildungen werden durch die Kombination wenigstens eines der unabhängigen Ansprüche mit den Merkmalen eines oder mehrerer Unteransprüche erhalten. Die Zeichnung ergänzt die Beschreibung. Merkmale der Figuren 1 und 2 können miteinander in vorteilhafter Weise kombiniert werden. Es zeigen in schematischer Darstellung:
Figur 1 - ein Regelstellglied mit zylinderförmigem Einströmungsvolumen,
Figur 2 - ein Regelstellglied in einer weiteren Ausführungsform.

Es wird darauf hingewiesen, dass die Zeichnung nicht maßstabsgetreu ist, um eine bessere Darstellung zu erreichen.

Figur 1 zeigt einen Querschnitt durch ein Regelstellglied 10. Zu diesem gehört ein vorzugsweise becherartig ausgebildetes erstes Teil 24 mit einer ersten ortsfest oder auch verstellbar gehaltenen Wandanordnung 12. Diese erste Wandanordnung 12 ist an einer Trennwand 14 fluiddicht befestigt, beispielsweise geschweißt, geschraubt, eingepresst, geklebt o.ä. Zu der ersten Wandanordnung 12 gehört ein Boden 16, der fluiddicht mit der Wandanordnung 12 verbunden ist.

Die erste Wandanordnung 12 und der Boden 16 umgrenzen ein Einströmungsvolumen 18, das im Wesentlichen zylinderförmig ist. Der Boden 16 ragt vorzugsweise in das Einströmungsvolumen 18 hinein. Er kann konisch geformt sein und Strömungsleitflächen 19 aufweisen. Vor der Trennwand 14 und im Einströmungsvolumen 18 herrscht der Eingangsdruck Pₑ. In der ersten Wandanordnung 12 sind z.B. zwei Ausnehmungen angeordnet, die eine erste Durchflussöffnung 20 und eine zweite Durchflussöffnung 22 bilden.

Die erste Wandanordnung 12 und der Boden 16 gehören zu dem ersten Teil 24 des Regelventils 10. Fluid, insbesondere Gas, vorzugsweise Brenngas, kann durch die erste Durchflussöffnung 20 und die zweite Durchflussöffnung 22 aus dem ersten Teil 24 und dem Einströmungsvolumen 18 in einen Bereich 26 treten, in dem der Ausgangsdruck Pₐ herrscht.

Außerhalb des ersten Teils 24 ist ein zweites Teil 28 angeordnet. Das zweite Teil 28 ist vorzugsweise becherartig ausgebildet. Es weist eine zweite Wandanordnung 30 mit einem ersten Wandabschnitt 32 und einem zweiten Wandabschnitt 34 auf. Die zweite Wandanordnung 30 ist zu der ersten Wandanordnung 12 vorzugsweise konzentrisch angeordnet und zu der ersten Wandanordnung 12 parallel verstellbar eingerichtet. Der erste Wandabschnitt 32 und der zweite Wandabschnitt 34 bilden ein Wandabschnittspaar 36. Die Wandabschnitte 32, 34 weisen eine erste Stellkante 38 und eine zweite Stellkante 40 auf. Das zweite Teil 28 weist ferner einen Radialverbinder 42 auf, der die zweiten Wandanordnung 30 mit einer zentralen Krafteinleitungsstelle verbindet. Der Radialverbinder 42 kann als geschlossener Boden, als gelochter, als Gitter, als Speichenstern oder dergleichen ausgebildet sein. Der Radialverbinder 42, das zweite Teil 28 und der Boden 16 des ersten Teils 24 umgrenzen ein Dämpfungsvolumen V_{D}. In den Radialverbinder 42 sind ein erstes Loch 44 und eine zweites Loch 46 eingearbeitet. An dem Radialverbinder 42 greift ein Hubstellschaft 48 mit einer Seite zentrisch an. Durch diese Anordnung wird auf das zweite Teil durch den Hubstellschaft 48 nur eine senkrechte Kraft ausgeübt und ungewünschte Hebelkräfte oder Reibung treten nicht auf.

Der Hubstellschaft 48 ist auf seiner anderen Seite mit einer Stellmembran 50 verbunden. Diese Stellmembran 50 ist vorzugsweise kreisförmig ausgebildet und an ihrem Rand mit einer zweiten Trennwand 52 verbunden. Unterhalb der Stellmembran 50 befindet sich vorzugsweise eine Druckdose 54, deren inneres Volumen auf der einen Seite von der Stellmembran 50 begrenzt wird. Gegenüber der Stellmembran 50 wird das innere Volumen durch einen Druckdosenboden 56 begrenzt. Das abgegrenzte Volumen kann über einen Eingang mit einer Leitung zur gezielten Druckbeaufschlagung der Stellmembran 50 verbunden sein. Alternativ kann der Eingang offen bleiben. Die insbesondere, wenn eine auf die Stellmembran 50 einwirkende Feder 60 vorgesehen ist, die eine definierte, ggfs. einstellbare Kraft auf die Stellmembran 50 und somit den Hubstellschaft 48 ausübt. Die Feder 60 stützt sich mit ihrem von der Stellmembrane 50 abliegenden Ende an einer verstellbaren Fassung ab, zu der ein Einstellrad 58 gehört. Diese ist drehfest mit einem gewindetragenden Element verbunden, das in einer Gewindebohrung des Druckdosenbodens 56 sitzt.

Durch Drehen eines Einstellrades 58 kann die Vorspannung der Feder 60, und damit die Federkraft auf die Stellmembran 50 eingestellt werden. Zusätzlich herrscht bei der dargestellten Membranstellung der Druck P_{Stell} im inneren Volumen der Druckdose 54.

Das Fluid strömt in das Einströmungsvolumen 18 vorzugsweise entlang einer Grundeinströmungsrichtung Sₑ ein. Diese Grundeinströmungsrichtung Sₑ wird an den (optionalen) Strömungsleitflächen 19 des Bodens 16 gebrochen und der Fluidstrom wird dadurch im Wesentlichen radial in Vorzugsausströmungsrichtungen Sₐ auf die quer zur Vorzugsausströmungsrichtung Sₐ angeordnete zweite Wandanordnung 30 gerichtet.

Bei unverschlossenen oder teilweise verschlossenen Durchflussöffnungen 20, 22 kann auf Grund eines Druckunterschieds zwischen Eingangsdruck Pₑ und Ausgangsdruck Pₐ Fluid (z.B. Gas) in das Einströmungsvolumen 18 strömen und durch einen ersten Durchflussquerschnitt 62 der ersten Durchflussöffnung 20 und durch einen zweiten Durchflussquerschnitt 64 der zweiten Durchflussöffnungen 22 hindurch in den Bereich 26 treten. Der Flächeninhalt und die Form des ersten und zweiten Durchflussquerschnitts 62, 64 werden durch die Durchflussöffnungen 20, 22, die Form der Wandabschnitte 32, 34 der zweiten Wand, die Form der Stellkanten 38, 40 und die Stellhöhe h der Stellkanten bestimmt. Insbesondere können diese Merkmale so aufeinander abgestimmt sein, dass sich ein linearer Zusammenhang zwischen Stellweg und Strömungswiderstand ergibt.

Auf das erste Begrenzungsteil 66 des ersten Wandabschnitts 32 und das zweite Begrenzungsteil 68 des zweiten Wandabschnitts 34, die die Durchflussöffnung zumindest teilweise verdecken, wirken eine erste Kraft F₁ und eine zweite Kraft F₂ auf Grund einer Druckdifferenz zwischen den Drücken Pₑ und Pₐ. Die erste und zweite Wandanordnung 12 sind zur Ebene E symmetrisch aufgebaut und die Kräfte F₁ und F₂ dem Betrage nach gleich und entgegengesetzt gerichtet. Sie heben sich im Zentrum des Regelstellglieds 10 auf. Die Kraft auf das zweite Teil 28 des Regelstellglieds 10 ist daher konstant und unabhängig vom Eingangsdruck Pₑ. Auch ein eingangsdruckseitiger Druckstoß führt nicht unmittelbar zu einem ungewünschten Stellen des zweiten Teils 28, da Kräfte, die aus dem Druckstoß resultieren, an dem zweiten Teil nur umfangsseitig an die Teile der Wandabschnitte 32, 34, die die Durchflussöffnungen 20, 22 zumindest teilweise verdecken, angreifen und sich im Zentrum des Regelstellglieds 10 aufheben.

Der Ausgangsdruck Pₐ soll letztendlich auf einen Wert entsprechend einem Solldruck eingeregelt werden. Der Solldruck kann in dem Ausführungsbeispiel durch die Gesamtkraft F_{R} der Feder 60 und der Kraft auf die Stellmembran 50 auf Grund des Drucks P_{Stell} eingestellt und vorgegeben werden. Die Stellmembran 50 nimmt eine Position ein, so dass zwischen der durch den Druck Pₐ verursachten Kraft auf die Stellmembran 50 und der resultierenden Kraft F_{R} ein Kräftegleichgewicht herrscht. Die Stellmembran 50 verstellt über den Hubstellschaft 48 das zweite Teil 28 parallel zu dem ersten Teil 24. Es wird damit die Stellhöhe h verstellt und damit die Größe des Durchflussquerschnitts durch die Durchflussöffnungen. Die Stellhöhe h ist eine Funktion des Drucks Pₐ und über den Verlauf der Größe der Durchflussquerschnittsfläche über die Stellhöhe h kann auf den Verlauf der Stellhöhe h als Funktion des Drucks Einfluss genommen werden. Auf diese Weise kann beispielsweise ein linearer, progressiver oder degressiver Funktionsverlauf erreicht und beispielsweise auch der Einfluss der Kraft-Weg-Kennlinie der Feder 60 ausgeglichen werden.

In einer Ausführungsform wird bei einer Stellbewegung des zweiten Teils 28 das Dämpfungsvolumen V_{D} vergrößert oder verkleinert. Dadurch muss Fluid in das Dämpfungsvolumen V_{D} durch das erste Loch 44 und das zweite Loch 46 zu- oder abfließen. Die Durchmesser der Löcher 44, 46 sind so gewählt, dass durch den Strömungswiderstand der Löcher 44, 46 eine Stellbewegung des Regelstellglieds 10 gedämpft wird. Auf diese Weise kann beispielsweise der Einfluss von schnellen periodischen Verbrauchsschwankungen vermindert werden, die z.B. von der Ausgangsseite, z.B. vom Gasverbraucher herrühren können und zu unnötigen Stellbewegungen führen könnten. Tritt ein Druckstoß beispielsweise auf der Eingangsdruckseite auf, dann breitet sich der erhöhte Druck in den Bereich 26 aus. Dieser Druck besitzt eine Wirkfläche einerseits auf den Radialverbinder 42 und andererseits auf die Stellmembran 50. Die Wirkflächen unterscheiden sich nur durch die Öffnungsflächen des ersten Lochs 44 und des zweiten Lochs 46. Die Kräfte auf den Radialverbinder 42 und die Stellmembran 50 sind daher annähernd gleich und entgegengesetzt. Die Wirkung, z.B. in Form einer ungewünschten Verstellung des zweiten Teils, wird durch die Anordnung erheblich reduziert.

In einer weiteren Ausführungsform sind der Durchmesser des ersten Lochs 44 und des zweiten Lochs 46 relativ groß gewählt oder es befinden sich beispielsweise mehrere große Löcher im Radialverbinder 42 oder der Radialverbinder 42 ist als Speichenrad ausgebildet. Insgesamt ist der Radialverbinder 42 gemäß dieser Ausführungsform also so ausgebildet, dass er nur wenig Strömungswiderstand, vorzugsweise keinen Strömungswiderstand aufweist. In diesem Ausführungsbeispiel ist die Wirkung durch einen Druckstoß oder eine plötzliche Erhöhung des Eingangsdrucks auf den Radialverbinder 42 direkt vernachlässigbar und der Druck wirkt unmittelbar auf die Stellmembran 50 und kann zu einer sofortigen Stellbewegung des zweiten Teils 28 führen. Vorzugsweise besitzt die Feder 60 oder ein alternatives Kraftelement, beispielsweise ein Gewicht, eine flache Kraft-Weg-Kennlinie. Schon ein geringer Druckunterschied zwischen Ist-Druck und Soll-Druck führt mit einem solchen weichen Kraftelement zu einer großen Stellbewegung der Stellmembran 60.

In Figur 2 ist ein weiteres Ausführungsbeispiel eines erfindungsgemäßen Regelstellglieds 10 dargestellt. Das erste Teil und das zweite Teil sind im Wesentlichen rotationssymmetrisch zu einer Symmetrieachse S aufgebaut. Die erste Wandanordnung 12 des ersten Teils 24 weist vier Ausnehmungen auf, die eine erste unterbrochene Durchflussöffnung 20 und eine zweite unterbrochene Durchflussöffnung 22 aufweisen. Das zweite Teil weist einen Radialverbinder 42 auf, der z.B. als geschlossener Boden ausgebildet ist und in dem sich im Zentrum ein erstes Loch 44 befindet. Durch dieses Loch kann einerseits Fluid aus dem Dämpfungsvolumen in den Bereich 26 außerhalb des zweiten Teils treten, andererseits ist in dem ersten Loch 44 der Hubstellschaft 48 angebracht. Das Regelstellglied 10 weist zusätzlich eine dritte Trennwand 70 auf, die zwischen dem zweiten Teil 28 und der Stellmembran 50 angeordnet ist. In der dritten Trennwand 70 befindet sich ein drittes Loch 72 und ein viertes Loch 74, durch die Fluid hindurchströmen kann.

Die Stellmembran 50 ist durch die Anordnung einer dritten Trennwand strömungsgeschützt und direkte Einflüsse eines Fluidstroms auf die Stellmembran 50 sind wenigstens reduziert. Dadurch wird z.B. verhindert, dass das zweite Teil 28 bei Speisung eines periodisch arbeitenden Gasmotors eine fortwährende periodische Stellbewegung ausführt.

Das Regelstellglied 10 weist darüber hinaus eine Schließventilanordnung 76 auf, die mit einem magnetischen Stellantrieb 78 betätigt werden kann. Die Schließventilanordnung 76 ist im Wesentlichen rotationssymmetrisch zur Symmetrieachse S oberhalb des ersten Teiles 24 und des zweiten Teiles 28 angeordnet. Die Schließventilanordnung 76 verfügt über einen ersten Ventilsitz 80, der auf einem Zwischenteil 84 angeordnet ist. Der erste Ventilsitz 80 ist mit einer ersten Dichtung 82 versehen. Ein erstes Verschlussteil 86 sitzt zumindest im geschlossenen Zustand der Schließventilanordnung 76 auf der ersten Dichtung 82 des ersten Ventilsitzes 80. Der erste Ventilsitz 80 und das erste Verschlussteil 86 sind Teile eines ersten Schließventils 87 der Schließventilanordnung. Ein zweiter Ventilsitz 86 ist auf der Trennwand 14 angeordnet und weist eine zweite Dichtung 90 auf. Ein zweites Verschlussteil 92 wird im Wesentlichen durch Teile der Unterseite des Zwischenteils 84 gebildet. Der zweite Ventilsitz 86 und das zweite Verschlussteil 92 sind Teile eines zweiten Schließventils 93. An dem ersten Verschlussteil 86, das teilweise in das Einströmungsvolumen 18 hineinragt, ist eine Sicherungsscheibe 94 angeordnet. Eine Rückstellfeder 96 ist radial um das erste Verschlussteil 86 angeordnet. Die Rückstellfeder 96 kann einerseits eine Kraft auf das erste Verschlussteil 86 und andererseits eine Kraft auf einen Dichtring 98 ausüben, der an einer Deckelwand 100 angeordnet ist. In das erste Verschlussteil 86 ist ein Ausgleichkanal 96 eingearbeitet, der eine fluidische Verbindung von dem Einströmungsvolumen 18 zu dem Ausgleichvolumen V_{A} herstellt.

Wird die geschlossene Schließventilanordnung 76 mit Hilfe des magnetischen Stellantriebs 78 geöffnet, wird zunächst das erste Verschlussteil 86 gegen die Kraft der Rückstellfeder 96 und auch gegen eine Druckdifferenzkraft bewegt. Das Zwischenteil 84 verbleibt dabei im Wesentlichen an seinem Platz. Durch das Anheben des ersten Verschlussteils 86 wird die Sitzverbindung des ersten Verschlussteils 86 auf der ersten Dichtung 82 des ersten Ventilsitzes 80 gelöst und es kann Fluid zwischen dem ersten Ventilsitz 80 und dem ersten Verschlussteil 86 in das Einströmungsvolumen 18 strömen. Dadurch kann ein erster Druckausgleich stattfinden. Wird das erste Verschlussteil 86 weiter bewegt, hebt es mit Hilfe der Sicherungsscheibe 94 das Zwischenteil 84 an und die Sitzverbindung des zweiten Verschlussteils 92 auf der zweiten Dichtung 90 des zweiten Ventilsitzes 88 wird gelöst, so dass das Fluid auch zwischen dem zweiten Ventilsitz 88 und dem zweiten Verschlussteil 92 in das Einströmungsvolumen 18 strömen kann.

Das erfindungsgemäße Regelstellglied 10 weist ein erstes Teil 24 mit einer ersten Wandanordnung 12 und einem Boden 16 auf, die ein Einströmungsvolumen 18 umgrenzen. Die erste Wandanordnung 12 weist wenigstens eine Durchflussöffnung 22, 23 auf, durch die Fluid aus dem Einströmungsvolumen 18 hindurchströmen kann. Das Regelstellglied 10 weist ferner ein zweites Teil 28 mit einer zweiten Wandanordnung 30 auf, die entlang der ersten Wandanordnung 12 verstellbar angeordnet ist. Dadurch kann der Fluidstrom durch eine Durchflussöffnung 22, 23 graduell freigegeben oder begrenzt werden. Vorzugsweise ist der Boden 16 so angeordnet, dass der Boden 16 eine Grundeinströmungsrichtung Sₑ in das Einströmungsvolumen 18 bricht und das zweite Teil 28 von Einströmungsdruckstößen abschirmt. Vorzugsweise weist die zweite Wandanordnung 30 wenigstens ein Paar Wandabschnitte 32, 34 auf, die vorzugsweise so gegenüber angeordnet sind, das sich die Kräfte auf die Wandabschnitte 32, 34 im Zentrum des zweiten Teils 28 aufheben.

### Bezugszeichenliste:

- 10: Regelstellglied
- 12: erste Wandanordnung
- 14: Trennwand
- 16: Boden
- 18: Einströmungsvolumen
- 19: Strömungsleitflächen
- 20: erste Durchflussöffnung
- 22: zweite Durchflussöffnung
- 24: erstes Teil
- 26: Bereich
- 28: zweites Teil
- 30: zweite Wandanordnung
- 32: erster Wandabschnitt
- 34: zweiter Wandabschnitt
- 36: Wandabschnittspaar
- 38: erste Stellkante
- 40: zweite Stellkante
- 42: Radialverbinder
- 44: erstes Loch
- 46: zweites Loch
- 48: Hubstellschaft
- 50: Stellmembran
- 52: zweite Trennwand
- 54: Druckdose
- 56: Druckdosenboden
- 58: Einstellrad
- 60: Feder
- 62: erster Durchflussquerschnitt
- 64: zweiter Durchflussquerschnitt
- 66: erstes Begrenzungsteil
- 68: zweites Begrenzungsteil
- 70: dritte Trennwand
- 72: drittes Loch
- 74: viertes Loch
- 76: Schließventilanordnung
- 78: magnetischer Stellantrieb
- 80: erster Ventilsitz
- 82: erste Dichtung
- 84: Zwischenteil
- 86: erstes Verschlussteil
- 87: erstes Schließventil
- 88: zweiter Ventilsitz
- 90: zweite Dichtung
- 92: zweites Verschlussteil
- 93: zweites Schließventil
- 94: Sicherungsscheibe
- 96: Rückstellfeder
- 98: Dichtring
- 100: Deckelwand

- A₁: erster Flächenvektor
- A₂: zweiter Flächenvektor
- E: Symmetrieebene
- F₁: erste Kraft
- F₂: zweite Kraft
- F_{R}: Gesamtkraft
- h: Stellhöhe
- Pₑ: Eingangsdruck
- Pₐ: Ausgangsdruck
- P_{Stell}: Druck in der Druckdose
- R: Verstellrichtung
- S: Symmetrieachse
- Sₑ: Grundeinströmungsrichtung
- Sₐ: Vorzugsauströmungsrichtung
- V_{D}: Dämpfungsvolumen
- V_{A}: Ausgleichvolumen

## Patentansprüche

1. Regelstellglied (10)
mit einem ersten Teil (24), das einen geschlossenen Boden (16) sowie eine erste Wandanordnung (12) mit wenigstens einer Durchflussöffnung (20, 22) aufweist, wobei der Boden (16) und die Wandanordnung (12) ein Einströmungsvolumen (18) umgrenzen,
mit einem zweiten Teil (28), das außerhalb des Einströmungsvolumens (18) angeordnet ist und eine zweite Wandanordnung (30) mit wenigstens zwei Wandabschnitten (32, 34) aufweist, wobei die Wandanordnung (30) entlang der ersten Wandanordnung (12) in einer Verstellrichtung verstellbar angeordnet ist, um die Durchflussöffnung (20, 22) durch die Wandabschnitte (32, 34) graduell freizugeben oder zu verschließen, und
mit einem Stellantrieb (50), der mit dem zweiten Teil (28) verbunden ist, um dieses in der Verstellrichtung (R) zu bewegen.

2. Regelstellglied (10) nach Anspruch 1,
**dadurch gekennzeichnet**, das jeweils zwei Wandabschnitte (32, 34) des zweiten Teils (28) miteinander verbunden sind und ein Wandabschnittspaar (36) bilden, wobei die Wandabschnitte (32, 34) eines Wandabschnittspaars (36) in entgegengesetzte Richtungen weisende Flächenvektoren (A₁, A₂) aufweisen.

3. Regelstellglied (10) nach Anspruch 1 oder 2,
**dadurch gekennzeichnet,**
**dass** die Wandabschnitte (32, 34) eines Wandabschnittspaares (36) so angeordnet sind, dass die Wandabschnitte (32, 34) des Wandabschnittpaares (36) in Bezug auf eine erste Ebene (E) flächensymmetrisch zueinander angeordnet sind.

4. Regelstellglied (10) nach einem der Ansprüche 1 bis 3, mit einem ersten Teil (24), dessen Wandanordnung (12) eine hohlzylindrische Grundgestalt aufweist.

5. Regelstellglied (10) nach einem der Ansprüche 1 bis 4, **dadurch gekennzeichnet, dass** der Boden (16) des ersten Teils (24) in das Einströmungsvolumen (18) vorsteht, um einen Einstrom in wenigstens zwei Teilströme unterschiedlicher Richtung zu unterteilen.

6. Regelstellglied (10) nach einem der Ansprüche 1 bis 5, **dadurch gekennzeichnet, dass** der Boden (16) wenigstens eine Strömungsleitfläche (19) aufweist.

7. Regelstellglied (10) nach einem der Ansprüche 1 bis 6, **dadurch gekennzeichnet, dass** die Wandabschnitte (32, 34) der zweite Wandanordnung (30) senkrecht zu einer Vorzugsausströmungsrichtung (Sₐ) orientiert sind.

8. Regelstellglied (10) nach einem der Ansprüche 1 bis 7, **dadurch gekennzeichnet, dass** der Stellantrieb (50) ein Membranstellantrieb ist.

9. Regelstellglied (10) nach einem der Ansprüche 1 bis 8 mit einem verstellbaren Sollwertgeber (54, 60), der dazu eingerichtet ist, eine Druckdifferenz zwischen Eingangsdruck (Pₑ) und Ausgangsdruck (Pₐ) vorzugeben.

10. Regelstellglied (10) nach Anspruch 9, **dadurch gekennzeichnet, dass** der Sollwertgeber (54, 60) eine Feder (60) aufweist.

11. Regelstellglied (10) nach einem der Ansprüche 1 bis 10 mit einer Schließventilanordnung (76).

12. Regelstellglied (10) nach Anspruch 11, **dadurch gekennzeichnet, dass** die Schließventilanordnung (76) ein erstes Schließventil (87) mit einem ersten Ventilsitz (80) und einem ersten Verschlussteil (86) und ein zweites Schließventil (93) mit einem zweiten Ventilsitz (88) und einem zweiten Verschlussteil (92) aufweist, wobei die Schließventile (87, 93) dazu eingerichtet sind, nacheinander zu öffnen oder zu schließen.
